# EUROPEAN PATENT SPECIFICATION

(11) **EP 3 953 188 B1**
(45) Date of publication and mention of the grant of the patent: **08.04.2026**
(21) Application number: 20724905.3
(22) Date of filing: 01.04.2020
(51) Int. Cl.: B60B 33/00

(54) **BRACKET FOR CASTOR WHEELS**
HALTERUNG FÜR LENKRÄDER
SUPPORT POUR ROULETTES

(30) Priority: 08.04.2019 GB 201904933
(43) Date of publication of application: 16.02.2022
(73) Proprietor: Container Components Europe Limited, Chesterfield, Derbyshire S42 5UX (GB)
(72) Inventor: HOLMES, Michael David, Chesterfield Derbyshire S42 5UX (GB)
(74) Representative: Potter Clarkson
(86) International application number: PCT/GB2020/050863
(87) International publication number: WO 2020/208339

(56) References cited:
- EP-A2- 0 737 596
- DE-A1- 10 158 614
- JP-A- 2007 125 942
- JP-A- 2007 261 466
- JP-A- 2013 144 530
- US-A- 4 940 252
- US-A1- 2005 015 928
- US-A1- 2008 172 829

## Description

This invention relates to a bracket, and particularly, but not exclusively, to a bracket for use in mounting a castor wheel to a container such as a large container of the type commonly used in commercial and industrial waste management. The invention is particularly directed to a bracket for locating and mounting a castor wheel onto a mounting surface of a container, a bracket assembly comprising the bracket, a container assembly comprising the bracket, and a method for mounting a castor wheel on a container.

A known castor mounting bracket consists of a first plate element on to which a castor wheel is affixable. Two legs extend from opposed ends of the plate, generally at an angle of about 90° from the plate. A further plate element then extends from each of the legs so that the further plates are parallel to the first plate but separated from it and not sharing the same plane. The further plates are significantly smaller than the first plate and are affixable to a mounting surface on the container by a suitable means, such as by weld.

Large solid waste containers are often exposed to high forces due to the nature in which the containers are treated. Known castor mounting brackets are a point of weakness in the design, particularly when impact forces are exerted on the castor wheels. Examples of such forces include when a container is lowered to the ground too rapidly from a waste collection vehicle which is emptying it. Often, two of the four wheels absorb the impact of the container hitting the ground as the angle at which the container is dropped is not perpendicular to the ground. Similarly, when a container rolls into a kerb a single castor wheel can absorb the impact of a full container coming to a sudden stop.

In these cases, and other similar situations, the forces experienced are shear forces that can shear the castor wheels away from the container. The mounting bracket absorbs these forces and maintains the castors' attachment to the container. However, the known mounting brackets are liable to twist and fail as a result of the forces they experience, particularly because their structure doesn't mitigate for excessive shear forces.

The alignment of a container's wheels is important to help the container be manoeuvred easily which in turn reduces the likelihood of accidental impacts of a single wheel against an obstruction such a kerb. Further, if the wheels are aligned then forces are more likely to be distributed evenly across them.

Known brackets require manual positioning when they are affixed to a container. The method of affixing a bracket to the mounting surface of a container typically involves a plurality of welds. The act of correctly positioning a bracket on a mounting surface and then maintaining that position during the welding process is difficult, time-consuming and hence, costly. A result of this is that the positioning of the bracket may be rushed at the detriments of the alignment of the wheels.

DE 101 58 614 A1 discloses a plate for attaching a castor to the base of an item of furniture, the plate having hooks formed by stamping out and bending the plate. The hooks fit through slots in the base and a plug is fitted through a bore in the plate into a corresponding bore in the base to stop the plate sliding.

US 2005/0015928 A1 discloses an apparatus for attaching a castor wheel. The apparatus comprises a castor bracket with means for engaging the castor plate of a castor wheel. The castor wheel is affixed to the castor plate and is then engaged with the castor bracket.

US 2008/0172829 A1 discloses a castor assembly comprising a bracket, castor wheel, four fastener means, wheel castor mounting structure, axle, bracket lip and bracket wall. The castor assembly is coupled to, and for use with, a bullet resistant barrier. Further brackets for a castor wheel are known from JP2013144530A, JP2007261466A and JP2007125942A.

According to a first aspect of the invention there is provided a bracket suitable for use in mounting a castor wheel to a container, the bracket comprising a mounting face and a fixing face, which faces are spaced apart from one another, wherein the mounting face comprising a first end portion, a second end portion and a locating portion positioned between the first and second end portions; the fixing face comprising a first fixing portion and a second fixing portion; and the bracket further comprises a first leg extending from the first end portion to a first end of the first fixing portion, a second leg extending from the second end portion to a first end of the second fixing portion, a third leg extending from a first end of the locating portion to a second end of the first fixing portion, and a fourth leg extending from a second end of the locating portion to a second end of the second fixing portion.

In embodiments of the invention, the bracket is affixable to a container. The container may be a large container of the type commonly used in commercial and industrial applications. The container may have a mounting surface on the underside of the container and the container may have a plurality of mounting surfaces on the underside of the container located close to each corner.

The locating portion allows the bracket to be readily located at a predetermined location on a mounting surface of a container with minimal time or effort required by an assembler of the container assembly.

The locating portion also provides improved structural strength to the bracket. The bracket is less prone to twisting and there are more sites at which the bracket may be affixed to a mounting surface of a container, for example by weld.

In embodiments of the invention, the locating portion comprises a plurality of locating apertures adapted to engage with locating pins.

In such embodiments, a container's mounting surface may comprise locating pins.

The provision of locating apertures adapted to engage with locating pins allows the bracket to be readily located on a mounting surface of a container.

In embodiments of the invention, the bracket is symmetrical along two axes parallel to the mounting face.

In such embodiments, there may be a pair of locating apertures. If the bracket is symmetrical along two axes parallel to the mounting face and the locating apertures are engaged with the locating pins, then the initial orientation of the bracket does not affect its positioning. In other words, once the apertures are engaged with the locating pins, the bracket will be appropriately positioned, independent of the bracket's initial orientation. This allows the bracket to be readily located on a mounting surface of a container without first having to ensure that the bracket is held at a predetermined orientation.

In embodiments of the invention, the mounting face is integrally formed with the fixing face.

In such embodiments, the bracket may be formed from a single sheet of material, such as a sheet of metal. This removes the need for joints between separate piece of material, which in turn strengthens the bracket. It also reduces the material and process costs required to form the bracket.

By forming the fixing face as two portions, the first fixing portion and the second fixing portion, the configuration of the bracket is improved.

The bracket comprises a first leg extending from the first end portion of the mounting face to a first end of the first fixing portion, and a second leg extending from the second end portion of the mounting plate to a first end of the second fixing portion, a third leg extending from a first end of the intermediate portion to a second end of the first fixing portion and a fourth leg extending from a second end of the intermediate portion to a second end of the second fixing portion.

There is therefore a total of four legs. This is double the number provided by known mounting brackets which generally comprise only two legs between the mounting face and the fixing face. The increased number of legs provides a greater level of support to the separation between the mounting face and fixing face, in turn making the bracket less likely to twist or buckle in response to shear forces.

In embodiments of the invention, the bracket comprises at least one gusset.

A gusset provides greater structural strength to a portion of the bracket. It acts to prevent the angle between two associated portions being deformed in response to a shear force. The provision of at least one gusset, therefore, improves the strength of such embodiments of the invention.

In embodiments of the invention, a gusset is formed between a leg and an associated fixing portion.

In such embodiments of the invention, the separation between the mounting face and the fixing face is provided by the angle between the legs and their associated fixing portion. The inclusion of at least one gusset formed between a leg and an associated fixing portion, improves the strength and rigidity of that portion of the bracket and helps maintain the separation between the mounting and fixing face.

In embodiments of the invention, a gusset is formed between each leg and its associated fixing portion.

In such embodiments of the invention, each portion of the bracket comprising a leg and an associated is strengthened by comprising a gusset. The gussets solidify each of the angles associated with the fixing face and hence indirectly solidifies each of the angles associated with the mounting face. This provides rigidity to the each of the angles between the different portions of the bracket and improves the overall strength of the bracket.

In embodiments of the invention, the fixing face comprises a plurality of fixing apertures each of which is configured to engage with a fixing screw.

Such embodiments of the invention may therefore be readily affixed to castor wheels which comprise a rectangular shaped fixing plate with apertures configured to engage with a fixing screw, whereby the apertures of the bracket fixing face correspond with those of the castor wheel fixing plate. A castor wheel may be positioned so that it's fixing plate abuts with the fixing face of the bracket and each of the apertures comprised in the fixing plate and the fixing face are aligned. A fixing screw may then be engaged with each pair of fixing plate and fixing face apertures.

In embodiments of the invention, the mounting face and fixing face are parallel.

In such embodiments, the weight of the container may act perpendicularly through the fixing plate of the castor wheel which is preferable for reducing wear of the fixing means. In such embodiments, the fixing means may be a plurality of fixing screws which engage perpendicularly to the fixing plate. Therefore, the weight of the container acts parallel to the axis of the fixing screws, this avoids any constant shear forces being applied to the screws or the apertures they engage with, hence reducing the wear.

According to a second aspect of the invention there is provided a bracket assembly comprising a bracket according to any one of the embodiments described according to the first aspect of the invention, further comprising a fixing plate that is affixable to the fixing face.

In such embodiments, the bracket may be readily affixed to castor wheels via a fixing plate with apertures configured to engage with a fixing screw, whereby the apertures of the bracket fixing face correspond with those of the castor wheel fixing plate.

In embodiments of the invention, the bracket assembly further comprises a plurality of fixing screws.

In such embodiments, a known castor wheel may be positioned so that it's fixing plate abuts with the fixing face of the bracket and each of the apertures comprised in the fixing plate and the fixing face are aligned. A fixing screw may then be engaged with each pair of fixing plate and fixing face apertures.

According to a third aspect of the invention there is provided a container assembly comprising a bracket according to any one of the embodiments described according to the first aspect of the invention, further comprising a container, which container comprises a mounting surface, which mounting surface comprises a mount locator configured to engage with the locating portion of the bracket, and wherein the bracket is affixable to the mounting surface.

In such embodiments, the bracket is readily affixable to the container. The container may be a large container of the type commonly used in commercial and industrial applications. The mounting surface may be located on a predetermined portion of the underside of the container. The container may have a plurality of mounting surfaces on the underside of the container located close to each corner. The locating portion of the bracket may readily be located to the mount locators of the container.

In embodiments of the invention, the mount locator comprises a plurality of locating pins which engage with the locating apertures.

In such embodiments, the bracket may be readily located at a predetermined location on the mounting surface of the container by engaging the locating apertures with the locating pins.

In embodiments of the invention, instead of comprising a bracket only, a container assembly comprises a bracket assembly according to any one of the embodiments described according to the second aspect of the invention.

In such embodiments, a castor wheel may readily be affixed to a container. The container may be a large container of the type commonly used in commercial and industrial applications.

According to a fourth aspect of the invention there is provided a method of mounting a castor wheel on a container comprising the steps of: providing a container assembly according to the third aspect of the invention; abutting a castor wheel fixing plate against the bracket fixing face; affixing the fixing plate to the fixing face; locating the bracket mounting face to a predetermined position on a mounting surface of a container; and affixing the mounting face to the mounting surface.

By means of the present invention, a method is provided for mounting a castor wheel on a container by abutting a fixing plate of a castor wheel against a fixing face of a bracket and then affixing the fixing plate to the fixing face. Once the castor wheel is affixed to the bracket, the method involves locating a mounting face of the bracket to a predetermined position on a mounting surface of a container and then affixing the mounting face to the mounting surface.

In such embodiments, the fixing plate and fixing face may each have a plurality of apertures, whereby the apertures of the fixing plate and the apertures of the fixing face may be aligned with each other. The step of affixing the fixing plate to the fixing face may be performed by engaging a fixing screw through each aligned pair of fixing plate and fixing face apertures.

The step of affixing the mounting face to the mounting surface may be performed using any suitable fixing means, such as welding.

In such embodiments, the container assembly may comprise a bracket assembly according to a second embodiment of the invention which comprises the castor wheel fixing plate and bracket comprising a fixing face and a mounting face of the present invention.

In such embodiments, the bracket may be a bracket according to the first aspect of the invention.

In such embodiments, the fixing plate and fixing face may each have a plurality of apertures, whereby the apertures of the fixing plate and the apertures of the fixing face may be aligned with each other. The step of affixing the fixing plate to the fixing face may be performed by engaging a fixing screw through each aligned pair of fixing plate and fixing face apertures.

The step of affixing the mounting face to the mounting surface may be performed using any suitable fixing means, such as welding.

The invention will now be described by way of example only with reference to the accompanying drawings in which:
Figure 1 is a schematic illustration of a bracket, according to an embodiment of the first aspect of the present invention, showing a top, isometric view of the bracket.
Figure 2 is a further schematic illustration of the bracket shown in Figure 1, here showing an underside, isometric view of the bracket.
Figure 3 is a further schematic illustration of the bracket shown in Figures 1 and 2, here showing a front view of the bracket.
Figure 4 is a further schematic illustration of the bracket shown in Figures 1, 2 and 3, here showing a top view of the bracket.
Figure 5 is a schematic illustration of a container assembly, according to an embodiment of the third aspect of the present invention, showing the bracket of Figures 1 to 4 being located on to a container mounting surface;
Figure 6 is a further schematic illustration of the container assembly shown in Figure 5, here showing the bracket located on to the container mounting surface;
Figure 7 is a schematic illustration of a container assembly, according to a further embodiment of the third aspect of the present invention, showing a bracket assembly, according to an embodiment of the second aspect of the present invention, mounted on a container mounting surface.
Figure 8 is a representation of a method of mounting a castor wheel on container according to the container assembly shown in Figure 7.

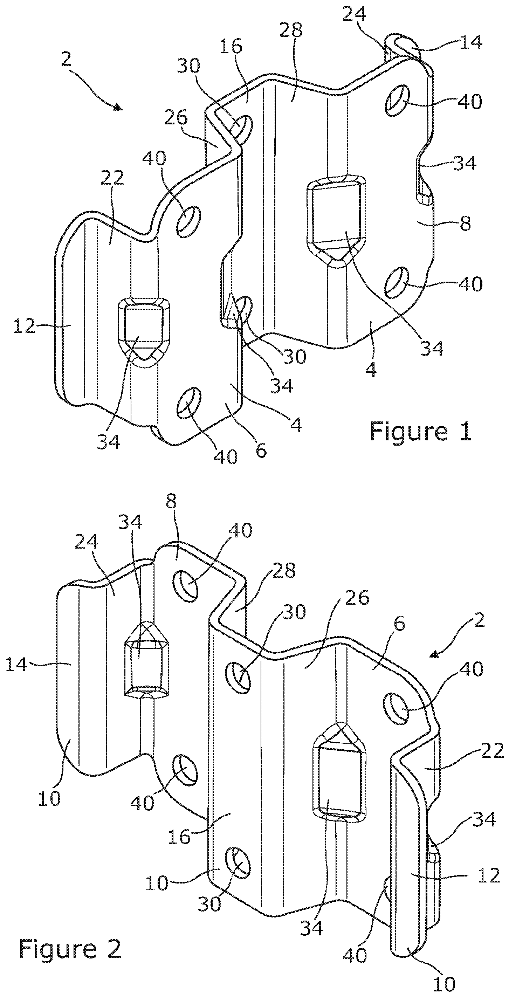

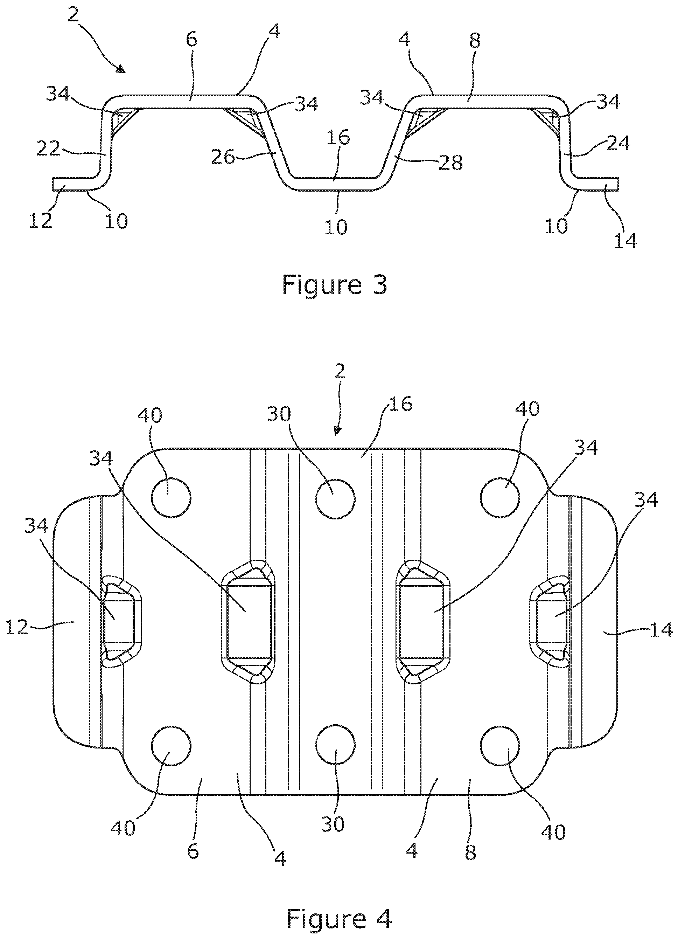

Referring initially to Figures 1 to 4, a bracket according to an embodiment of the first aspect of the present invention, is defined generally by the reference numeral 2. The bracket 2 comprises a fixing face 4, which itself comprises a first fixing portion 6 and a second fixing portion 8.

The bracket 2 further comprises a mounting face 10, which itself comprises a first end portion 12, a second end portion 14 and a locating portion 16.

The fixing face 4 and mounting face 10 are spaced apart from one another as shown in the figures. Extending from the first end portion 12 to a first end of the first fixing portion 6 is a first leg 22. Extending from the second end portion 14 to a first end of the second fixing portion 8 is a second leg 24. Extending from a first end of the locating portion 16 to a second end of the first fixing portion 6 is a third leg 26. Finally, extending from a first end of the locating portion 16 to a second end of the second fixing portion 8 is a fourth leg 28.

The locating portion 16 comprises locating apertures 30, which are adapted to engage with locating pins.

The bracket 2 further comprises gussets 34 formed between each leg 22, 24, 26, 28 and its associated fixing portion 6, 8.

The fixing face 4 further comprises fixing apertures 40 which are configured to engage with a fixing screw, with two of the fixing apertures 40 positioned in each of the first and second fixing portions 6, 8.

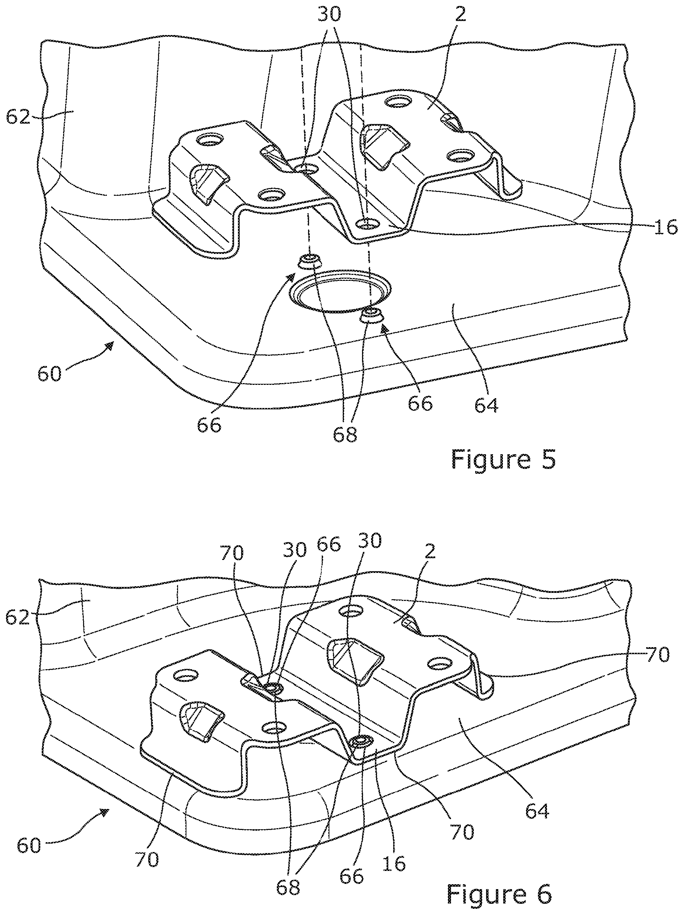

Referring now to Figures 5 and 6, a container assembly according to an embodiment of the third aspect of the present invention, is defined generally by the refence numeral 60. Figure 5 shows a portion of a container 62 with a mounting surface 64. In order to locate bracket 2 at a predetermined location on the mounting surface 64, the locating portion 16 of the bracket 2 is guided towards a mount locator 66. In this embodiment, the mount locator 66 comprises locating pins 68 which are adapted to engage with the locating apertures 30 comprised within the bracket 2. Guidelines are provided in Figure 5 to show the locating apertures 30 being guided towards the locating pins 68.

Figure 6 shows the container assembly 60, once the bracket 2 has been correctly located on to the mounting surface 64 with the locating apertures 30 and locating pins 68 engaged. Once located, there are four affixing sites 70, at which the bracket 2 may be affixed to the container 62 via any suitable means, such as welding.

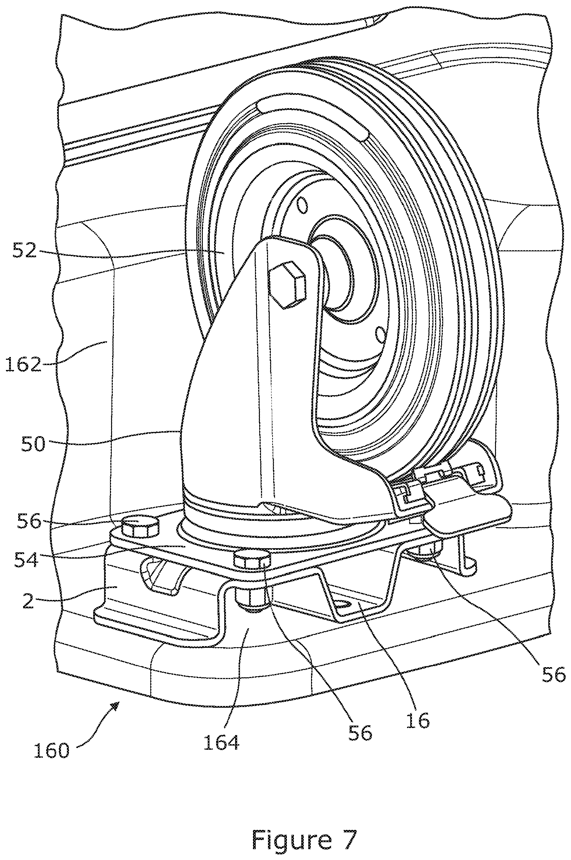

Referring now to Figure 7, a container assembly according to a further embodiment of the third aspect of the present invention, is defined generally by the refence numeral 160. In this embodiment, the container assembly comprises a bracket assembly according to an embodiment of the second aspect of the present invention, the bracket assembly is defined generally by the refence numeral 50. The bracket assembly comprises a bracket 2 according to an embodiment of the first aspect of the invention, and further comprises a castor wheel 52 with an adjoining fixing plate 54 and a plurality of fixing screws 56.

The bracket assembly 50 is located on a mounting surface 164 of a container 162 via a locating portion 16 of the bracket 2. The fixing plate 54 is fixed to the fixing face 4 of the bracket 2 by the engagement of fixing screws 56 with the fixing apertures 40 (shown in Figures 1a, 1b and 1d).

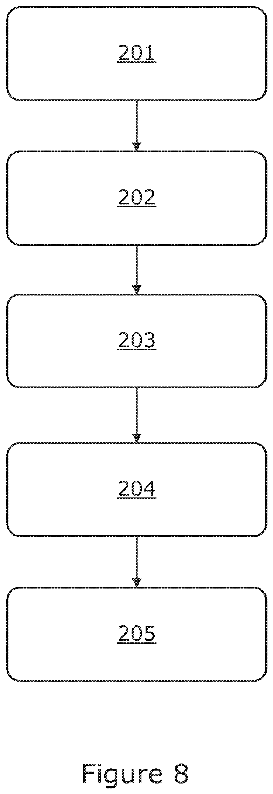

Referring now to Figure 8, a method for mounting a castor wheel on to a container is represented. The method of Figure 8 includes a first step 201 of providing a container assembly 160. In a second step 202, a fixing plate 54, adjoined to a castor wheel 52, is abutted against a fixing face 4 of a bracket 2. In a third step 203, the fixing plate 54 is affixed to the fixing face 4. In a fourth step 204, a mounting face 10 of the bracket 2 is located to a predetermined position on a mounting surface 164 of a container 162. In a fifth step 205, the mounting face is affixed to the mounting surface.

A castor wheel may therefore be mounted on a container by following the method represented in Figure 8 in providing a container assembly 160, abutting a fixing plate 54 against a fixing face 4 and then affixing the fixing plate 54 to the fixing face 4. The caster wheel 52 is therefore mounted on the bracket 2. The method continues in locating the mounting face 10 to a predetermined position on a mounting surface 164 of a container 162 and then affixing the mounting face 10 to the mounting surface 164. Hence the castor wheel 52 is mounted on the container 162.

## Claims

1. A bracket (2) suitable for use in mounting a castor wheel (52) to a container (62), the bracket (2) comprising a mounting face (10) and a fixing face (4), which faces are spaced apart from one another, wherein:
the mounting face (10) comprises a first end portion (12), a second end portion (14) and a locating portion (16) positioned between the first and second end portions (12, 14);
the fixing face (4) comprises a first fixing portion (6) and a second fixing portion (8); and
the bracket further comprises a first leg (22) extending from the first end portion (12) to a first end of the first fixing portion (6), a second leg (24) extending from the second end portion (14) to a first end of the second fixing portion (8), a third leg (26) extending from a first end of the locating portion (16) to a second end of the first fixing portion (6), and a fourth leg (28) extending from a second end of the locating portion (16) to a second end of the second fixing portion (8).

2. A bracket (2) according to claim 1, wherein the locating portion (16) comprises a plurality of locating apertures (30) adapted to engage with locating pins (68).

3. A bracket (2) according to either of claim 1 or claim 2, wherein the bracket (2) is symmetrical along two axes parallel to the mounting face (10).

4. A bracket (2) according to any of the preceding claims, wherein the mounting face (10) is integrally formed with the fixing face (4).

5. A bracket (2) according to any of the preceding claims, wherein the bracket comprises at least one gusset (34).

6. A bracket (2) according to claim 5, wherein a gusset (34) is formed between a leg (22, 24, 26, 28) and an associated fixing portion (6, 8).

7. A bracket (2) according to claim 6, wherein a gusset (34) is formed between each leg (22, 24, 26, 28) and its associated fixing portion (6, 8).

8. A bracket (2) according to claim 7, wherein the fixing face (4) comprises a plurality of fixing apertures (40) each of which is configured to engage with a fixing screw (56).

9. A bracket (2) according to any of the preceding claims, wherein the mounting face (10) and fixing face (4) are parallel.

10. A bracket assembly (50) comprising a bracket (2) according to any one of the preceding claims, further comprising a fixing plate (54) that is affixable to the fixing face (4).

11. A bracket assembly (50) according to claim 10, wherein the bracket assembly (50) further comprises a plurality of fixing screws (56).

12. A container assembly (60) comprising a bracket (2) according to any of claim 1 to claim 9, further comprising a container (62), which container (62) comprises a mounting surface (64), which mounting surface (64) comprises a mount locator (66) configured to engage with the locating portion (16) of the bracket, and wherein the bracket (2) is affixable to the mounting surface (64).

13. A container assembly (60) comprising a bracket (2) according to claim 2 or any claim dependent thereon, further comprising a container (62), which container (62) comprises a mounting surface (64), which mounting surface (64) comprises a mount locator (66), which mount locator (66) comprises a plurality of locating pins (68) which engage with the locating apertures (30).

14. A container assembly (60) comprising a bracket assembly (50) according to claim 10 or claim 11, further comprising a container (62), which container (62) comprises a mounting surface (64), which mounting surface (64) comprises a mount locator (66).

15. A method of mounting a castor wheel (52) on a container (62) comprising the steps of:
providing a container assembly (60) according to any one of claims 12 to 14;
abutting a castor wheel fixing plate (54) against a bracket fixing face (4);
affixing the fixing plate (54)to the fixing face (4);
locating a bracket mounting face (10) to a predetermined position on a mounting surface (64) of the container (62);
affixing the mounting face (10) to the mounting surface (64).

## Patentansprüche

1. Halterung (2), die zur Verwendung bei der Befestigung eines Laufrades (52) an einem Behälter (62) geeignet ist, wobei die Halterung (2) eine Montagefläche (10) und eine Befestigungsfläche (4) umfasst, wobei die Flächen voneinander beabstandet sind, wobei:
das die Montagefläche (10) einen ersten Endabschnitt (12), einen zweiten Endabschnitt (14) und einen Positionierungsabschnitt (16) umfasst, der zwischen dem ersten und dem zweiten Endabschnitt (12, 14) angeordnet ist;
die Befestigungsfläche (4) einen ersten Befestigungsabschnitt (6) und einen zweiten Befestigungsabschnitt (8) umfasst; und
die Halterung ferner einen ersten Schenkel (22) umfasst, der sich von dem ersten Endabschnitt (12) zu einem ersten Ende des ersten Befestigungsabschnitts (6) erstreckt, einen zweiten Schenkel (24), der sich von dem zweiten Endabschnitt (14) zu einem ersten Ende des zweiten Befestigungsabschnitts (8) erstreckt, einen dritten Schenkel (26), der sich von einem ersten Ende des Positionierungsabschnitts (16) zu einem zweiten Ende des ersten Befestigungsabschnitts (6) erstreckt, und einen vierten Schenkel (28), der sich von einem zweiten Ende des Positionierungsabschnitts (16) zu einem zweiten Ende des zweiten Befestigungsabschnitts (8) erstreckt.

2. Halterung (2) nach Anspruch 1, wobei der Positionierungsabschnitt (16) eine Vielzahl von Positionierungsöffnungen (30) umfasst, die zum Eingreifen in Positionierungsstifte (68) geeignet sind.

3. Halterung (2) nach einem der Ansprüche 1 oder 2, wobei die Halterung (2) entlang zweier Achsen parallel zur Montagefläche (10) symmetrisch ist.

4. Halterung (2) nach einem der vorstehenden Ansprüche, wobei die Montagesfläche (10) einstückig mit der Befestigungsfläche (4) ausgebildet ist.

5. Halterung (2) nach einem der vorstehenden Ansprüche, wobei die Halterung mindestens einen Zwickel (34) umfasst.

6. Halterung (2) nach Anspruch 5, wobei zwischen einem Schenkel (22, 24, 26, 28) und einem zugehörigen Befestigungsabschnitt (6, 8) ein Zwickel (34) gebildet ist.

7. Halterung (2) nach Anspruch 6, wobei zwischen jedem Schenkel (22, 24, 26, 28) und seinem zugehörigen Befestigungsabschnitt (6, 8) ein Zwickel (34) gebildet ist.

8. Halterung (2) nach Anspruch 7, wobei die Befestigungsfläche (4) eine Vielzahl von Befestigungsöffnungen (40) umfasst, von denen jede konfiguriert ist, um in eine Befestigungsschraube (56) einzugreifen.

9. Halterung (2) nach einem der vorstehenden Ansprüche, wobei die Montagefläche (10) und die Befestigungsfläche (4) parallel sind.

10. Halterungsbaugruppe (50), umfassend eine Halterung (2) nach einem der vorstehenden Ansprüche, ferner umfassend eine Befestigungsplatte (54), die an der Befestigungsfläche (4) befestigt werden kann.

11. Halterungsbaugruppe (50) nach Anspruch 10, wobei die Halterungsbaugruppe (50) ferner eine Vielzahl von Befestigungsschrauben (56) umfasst.

12. Behälterbaugruppe (60), umfassend eine Halterung (2) nach einem der Ansprüche 1 bis 9, ferner umfassend einen Behälter (62), wobei der Behälter (62) eine HMontagesoberfläche (64) umfasst, wobei die Montagesoberfläche (64) einen Montagelokalisierer (66) umfasst, der konfiguriert ist, um in den Lokalisierungsabschnitt (16) der Halterung einzugreifen, und wobei die Halterung (2) an der Montageoberfläche (64) befestigt werden kann.

13. Behälterbaugruppe (60), umfassend eine Halterung (2) nach Anspruch 2 oder einem davon abhängigen Anspruch, ferner umfassend einen Behälter (62), wobei der Behälter (62) eine Montageoberfläche (64) umfasst, wobei die Montageoberfläche (64) einen Montagelokalisierer (66) umfasst, wobei der Montagelokalisierer (66) eine Vielzahl von Lokalisierungsstiften (68) umfasst, die in die Lokalisierungsöffnungen (30) eingreifen.

14. Behälterbaugruppe (60), umfassend eine Halterungsbaugruppe (50) nach Anspruch 10 oder 11, ferner umfassend einen Behälter (62), wobei der Behälter (62) eine Montageoberfläche (64) umfasst, wobei die Montageoberfläche (64) einen Montagelokalisierer (66) umfasst.

15. Verfahren zum Montieren eines Laufrades (52) an einem Behälter (62), umfassend die folgenden Schritte:
Bereitstellen einer Behälterbaugruppe (60) nach einem der Ansprüche 12 bis 14;
Anlegen einer Radbefestigungsplatte (54) an eine Bügelbefestigungsfläche (4);
Befestigen der Befestigungsplatte (54) an der Befestigungsfläche (4);
Anordnen einer Halterungsmontagesfläche (10) in einer vorbestimmten Position auf einer Montageoberfläche (64) des Behälters (62);
Befestigen der Montagefläche (10) an der Montageoberfläche (64).

## Revendications

1. Support (2) conçu pour une utilisation dans le montage d'une roulette (52) sur un conteneur (62), le support (2) comprenant une face de montage (10) et une face de fixation (4), lesquelles faces sont espacées l'une de l'autre, dans lequel :
la face de montage (10) comprend une première partie d'extrémité (12), une seconde partie d'extrémité (14) et une partie de positionnement (16) positionnée entre les première et seconde parties d'extrémité (12, 14) ;
la face de fixation (4) comprend une première partie de fixation (6) et une seconde partie de fixation (8) ; et
le support comprend également une première branche (22) se prolongeant de la première partie d'extrémité (12) à une première extrémité de la première partie de fixation (6), une deuxième branche (24) se prolongeant de la seconde partie d'extrémité (14) à une première extrémité de la seconde partie de fixation (8), une troisième branche (26) se prolongeant d'une première extrémité de la partie de positionnement (16) à une seconde extrémité de la première partie de fixation (6), et une quatrième branche (28) se prolongeant d'une seconde extrémité de la partie de positionnement (16) à une seconde extrémité de la seconde partie de fixation (8).

2. Support (2) selon la revendication 1, dans lequel la partie de positionnement (16) comprend une pluralité d'ouvertures de positionnement (30) conçues pour venir en prise avec des broches de positionnement (68).

3. Support (2) selon la revendication 1 ou la revendication 2, dans lequel le support (2) est symétrique le long de deux axes parallèles à la face de montage (10).

4. Support (2) selon l'une quelconque des revendications précédentes, dans lequel la face de montage (10) est formée d'un seul tenant avec la face de fixation (4).

5. Support (2) selon l'une quelconque des revendications précédentes, dans lequel le support comprend au moins un gousset (34).

6. Support (2) selon la revendication 5, dans lequel un gousset (34) est formé entre une branche (22, 24, 26, 28) et une partie de fixation associée (6, 8).

7. Support (2) selon la revendication 6, dans lequel un gousset (34) est formé entre chaque branche (22, 24, 26, 28) et sa partie de fixation associée (6, 8).

8. Support (2) selon la revendication 7, dans lequel la face de fixation (4) comprend une pluralité d'ouvertures de fixation (40) dont chacune est configurée pour venir en prise avec une vis de fixation (56).

9. Support (2) selon l'une quelconque des revendications précédentes, dans lequel la face de montage (10) et la face de fixation (4) sont parallèles.

10. Ensemble de support (50) comprenant un support (2) selon l'une quelconque des revendications précédentes, comprenant également une plaque de fixation (54) qui peut être fixée à la face de fixation (4).

11. Ensemble de support (50) selon la revendication 10, dans lequel l'ensemble de support (50) comprend également une pluralité de vis de fixation (56).

12. Ensemble de conteneur (60) comprenant un support (2) selon l'une quelconque des revendications 1 à 9, comprenant également un conteneur (62), lequel conteneur (62) comprend une surface de montage (64), laquelle surface de montage (64) comprend un localisateur de montage (66) configuré pour venir en prise avec la partie de localisation (16) du support, et dans lequel le support (2) peut être fixé à la surface de montage (64).

13. Ensemble de conteneur (60) comprenant un support (2) selon la revendication 2 ou une quelconque revendication dépendant de celle-ci, comprenant également un conteneur (62), lequel conteneur (62) comprend une surface de montage (64), laquelle surface de montage (64) comprend un localisateur de montage (66), lequel localisateur de montage (66) comprend une pluralité de broches de positionnement (68) qui viennent en prise avec les ouvertures de positionnement (30).

14. Ensemble de conteneur (60) comprenant un ensemble de support (50) selon la revendication 10 ou la revendication 11, comprenant également un conteneur (62), lequel conteneur (62) comprend une surface de montage (64), laquelle surface de montage (64) comprend un localisateur de montage (66).

15. Procédé de montage d'une roulette (52) sur un conteneur (62) comprenant les étapes :
de fourniture d'un ensemble de conteneur (60) selon l'une quelconque des revendications 12 à 14 ;
de mise en butée d'une plaque de fixation de roulette (54) contre une face de fixation de support (4) ;
de fixation de la plaque de fixation (54) sur la face de fixation (4) ;
de positionnement d'une face de montage de support (10) à une position prédéterminée sur une surface de montage (64) du conteneur (62) ;
de fixation de la face de montage (10) à la surface de montage (64).
